Europäisches Patentamt

European Patent Office

Office européen des brevets

(11) Publication number: 0 349 961

A2

## (12) EUROPEAN PATENT APPLICATION

(21) Application number: 89112134.5

(51) Int. Cl.⁴: G01C 19/72

(22) Date of filing: 03.07.89

(30) Priority: 08.07.88 JP 170588/88

(43) Date of publication of application:
10.01.90 Bulletin 90/02

(84) Designated Contracting States:
DE FR GB

(71) Applicant: JAPAN AVIATION ELECTRONICS
INDUSTRY, LIMITED
21-6, Dogenzaka 1-chome
Shibuya-ku Tokyo(JP)

(72) Inventor: Okada, Kenichi c/o Japan Aviation
Electronics
Industry Limited 21-6, Dogenzaka 1-chome
Shibuya-ku Tokyo(JP)
Inventor: Sakuma, Kazuhiro c/o Japan
Aviation Electronics
Industry Limited 21-6, Dogenzaka 1-chome
Shibuya-ku Tokyo(JP)
Inventor: Nakagawa, Shinichi c/o Japan
Aviation Electronics
Industry Limited 21-6, Dogenzaka 1-chome
Shibuya-ku Tokyo(JP)
Inventor: Ohno, Aritaka c/o Japan Aviation
Electronics
Industry Limited 21-6, Dogenzaka 1-chome
Shibuya-ku Tokyo(JP)
Inventor: Ichisugi, Noriaki c/o Japan Aviation
Electronics
Industry Limited 21-6, Dogenzaka 1-chome
Shibuya-ku Tokyo(JP)

(74) Representative: Blumbach Weser Bergen
Kramer Zwirner Hoffmann Patentanwälte
Radeckestrasse 43
D-8000 München 60(DE)

(54) Inertial equipment using fiber optic gyroscope.

(57) In inertial equipment using a fiber optic gyroscope, optical fibers (16x, 16y, 16z) for respective axes are wound on a common chassis (41) in a manner to be removable therefrom in their axial directions, respectively. Inside the chassis (41) there are disposed an optical section (42), an electronic circuit section (45) and an accelerometer (44) of the fiber optic gyroscope.

FIG. 22

## INERTIAL EQUIPMENT USING FIBER OPTIC GYROSCOPE

BACKGROUND OF THE INVENTION

The present invention relates to inertial equipment using a fiber optic gyroscope which is employed for attitude control, attitude measurement, and inertial navigation of rockets, aircraft, and so on.

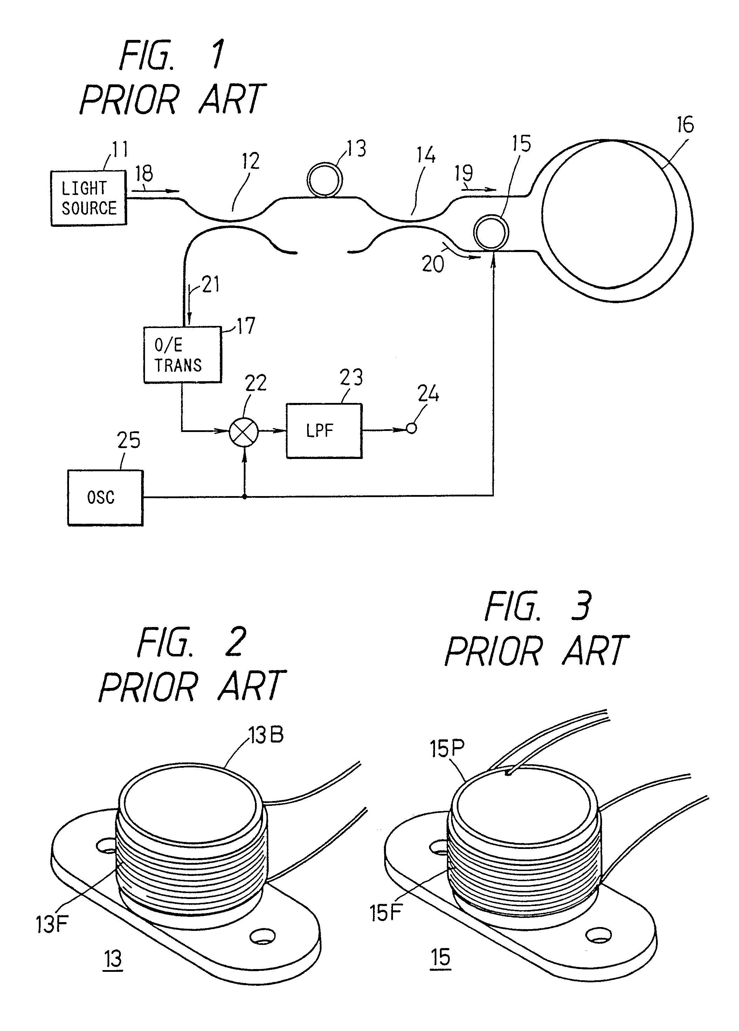

Fig. 1 illustrates a known fiber optic gyroscope. Light 18 emitted from a light source 11 is applied via a first optical coupler 12 and a polarizer 13 to a second optical coupler 14, by which it is split into two parts 19 and 20 which propagate through at least one turn of optical fiber coil 16 in opposite directions. The light 19 and the light 20 are phase modulated by a phase modulator 15 disposed at one end of the optical fiber coil 16 and then coupled together by the second optical coupler 14.

The resulting interference light reaches optoelectric transducer 17 via the polarizer 13 and the first optical coupler 12. The intensity $I_0$ of the interference light having thus reached the optoelectric transducer 17 is as follows:

$$I_0 = B\{1 + \cos\Delta\phi\cdot(J_0(x) + 2\sum_{n=1}^{\infty}(-1)^n\cdot J_{2n}(x)\cos 2n\omega t')$$

$$- \sin\Delta\phi(2\sum_{n=1}^{\infty}(-1)^2\cdot J_{2n+1}(x)\cdot\cos(2n+1)\omega t')\}\ldots(1)$$

where B is a constant, $J_n$ is a Bessel function of an nth order (where n = 0, 1, 2, 3, ...), $x = 2A\sin f_m\tau$, A is the amplitude of phase modulation, $\tau$ is the time for propagation of light through the optical fiber coil 16, $f_m$ is the phase modulation frequency, and $t' = t - \tau/2$.

The phase difference $\Delta\phi$ in Eq. (1) is a phase difference between the both light 19 and 20 due to an irreversible effect (the Sagnac effect) caused by an angular velocity applied to the optical fiber coil 16. This phase difference is expressed as follows:

$$\Delta\phi = \frac{8\pi S}{C\lambda}\cdot\Omega \qquad\qquad \ldots\ldots(2)$$

where S is the sum of the areas surrounded by the optical fiber coil 16, C is the velocity of light, and $\lambda$ is the wavelength of light emitted from the light source.

As is evident from Eq. (1), the interference light $I_0$ contains a term proportional to $\cos\Delta\phi$ and a term proportional $\sin\Delta\phi$. Usually, in the fiber optic gyroscope the component proportional to $\sin\Delta\phi$ is synchronously detected by the output of an oscillator 25 so as to provide for increased sensitivity in a very narrow range of the input angular velocity.

In Fig. 1, the opto-electronic transducer output is applied to a synchronous detector 22 wherein the same frequency component as that of the phase modulation is synchronously detected by the output of the oscillator 25 and from which it is provided via a low-pass filter 23 to an output terminal 24. This output is expressed by the following equation.

$V_1 = KJ_1(x)\sin\Delta\phi$     (3)

where K is a constant and $J_1(x)$ is a primary Bessel function of the first kind.

As is evident from Eq. (3), the output $V_1$ is in proportion to the sine of the phase difference $\Delta\phi$. Hence it is usually corrected for linearization.

The polarizer 13 is such an optical fiber type polarizer as shown in Fig. 2, in which an optical fiber 13F of different bending losses for polarization modes orthogonal to each other is wound on a cylindrical bobbin 13B in such a manner as to extinguish light of the one polarization mode but propagate light of the other polarization mode with a low loss.

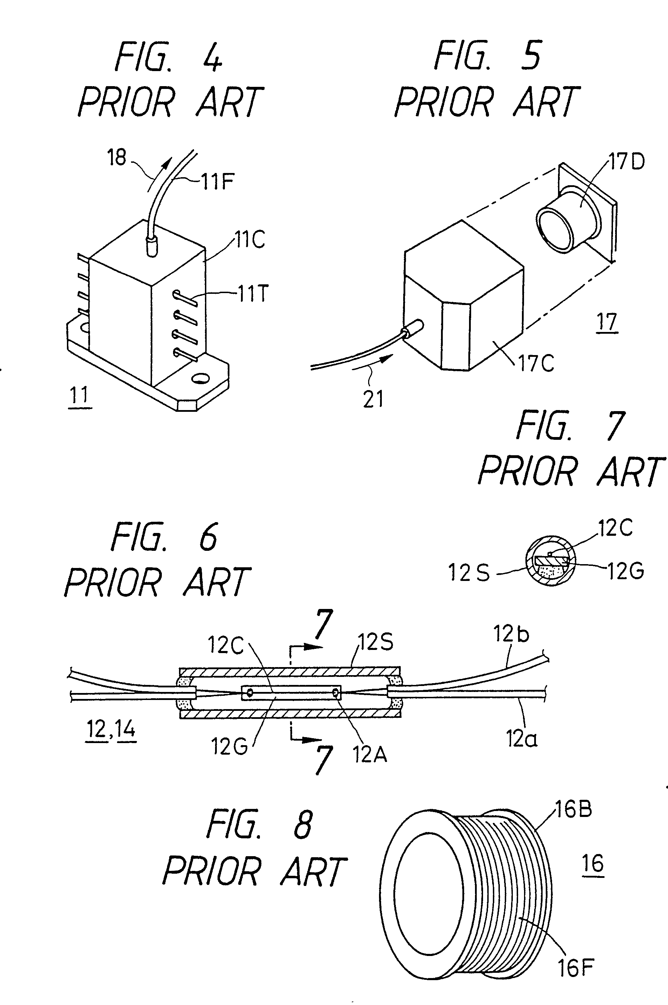

The phase modulator 15 is such as shown in Fig. 3, in which an optical fiber 15F is wound around an electrostrictive vibrator 15P. The phase modulator 15 modulates the phase of light passing through the optical fiber 15F, by expansion and contraction of the optical fiber 15F at a driving frequency.

Fig. 4 shows the light source 11 constructed as a module by housing, in a case 11C, at least a light source chip, a photodetector for monitoring a portion of light emitted from the light source chip, and an end portion of the optical fiber 11F, through which the light from the chip is supplied to the first optical coupler 12. Fig. 5 shows the opto-electric transducer 17 constructed as a photodetector module by housing, in a case 17C, at least a photodetector 17D with an amplifier and an end portion of the optical fiber 17F in opposing relation to the former.

Figs. 6 and 7 show an arrangement of the optical coupler 12 (or 14), which is produced by fusing together two optical fibers 12a and 12b with a propane-oxygen flame and extending them with proper force so that their cores become thinner and closer to each other. With such a structure, light incident on one of the two optical fibers easily seeps out therefrom and into the other. Thus, the two optical fibers form an optical fiber coupler 12C (or 14C) which possesses an optical coupling function. The optical fiber coupler thus obtained is bonded to a glass plate 12G with an ultraviolet-setting adhesive 12A, for instance, and is protected with a sleeve 12S.

Fig. 8 shows the conventional optical fiber coil 16 formed by winding an optical fiber 16F around a hard bobbin 16B. Conventionally, the fiber optic gyroscope has an arrangement in which the polarizer, the phase modulator, the light source module, the photodetector module, and the optical fiber coupler are encompassed with the optical fiber coil 16.

The polarizer 13, which is manufactured in accordance with the difference in bending loss characteristic between the polarization modes, cannot be bent into a loop with so small a diameter from the viewpoint of minimizing the bending loss in the transmission mode--about 20 mm$\phi$ or more is preferable in practice. The phase modulator 15 cannot be turned into a loop with so small a diameter, either, in order to avoid an increase in the transmission loss of a polarization maintaining optical fiber and an increase in crosstalk between the polarization modes which are caused by bending of the optical fiber. In the case of using a polarization preserving optical fiber of low bending loss, a diameter of 10 mm$\phi$ or more is preferable in practice. The light source module measures about 8 by 8 by 12 mm, and the photodetector measures about 10 by 10 by 12 mm. The optical fiber coupler measures approximately 4 mm$\phi$ by 30 to 40 mm. Since the sensitivity is in proportion to the total area surrounded by the optical fiber as is evident from Eq. (2), the diameter, width, etc. of the optical fiber coil 16 are properly chosen according to the required performance of the fiber optic gyroscope.

There has been a strong demand for miniaturization of attitude controls, attitude measuring instruments, inertial equipment, etc. which are loaded on rockets, air planes, and similar flying objects. This inevitably calls for miniaturization of an angular velocity sensor (a gyroscope) which is used with them. The fiber optic gyroscope neither involves any rotary elements nor needs precision working and assembling unlike conventional mechanical gyroscopes, and hence are expected to be advantageous in terms of service life, reliability and manufacturing costs. However, fiber optic gyroscopes proposed so far cannot afford miniaturization of inertial equipment because of bulkiness of their optical components.

## SUMMARY OF THE INVENTION

It is therefore an object of the present invention to provide a fiber optic gyroscope which is small in size, and hence permits miniaturization of inertial equipment.

According to the present invention, the fiber optic gyroscope is miniaturized by intergrating a plurality of components. The optical fiber of the polarizer is wound around the bobbin of the optical fiber coil. The light source module or photodetector module is disposed in the bobbin of the optical fiber of the polarizer, or the optical fiber of the polarizer is wound directly around the light source module or photodetector module.

The light source module or photodetector module is housed inside the electrostrictive vibrator of the phase modulator. The bobbin of the optical fiber of the polarizer is disposed coaxially with the electrostrictive vibrator. The light source and the photodetector are housed in the same package. The first and second optical couplers are housed in the same package.

In a multiaxis fiber optic gyroscope, optical fibers of polarizers for respective axes are wound on a common bobbin, or the optical fibers of the polarizers are wound around individual bobbins, which are disposed coaxially. Light sources for respective axes are incorporated in one light source module, on which the optical fibers of the polarizers are wound. Photodetectors for respective axes are housed in one photodetector module, on which the optical fibers of the polarizers are wound.

The electrostrictive vibrator of the phase modulator is provided in common to respective axes. The light source module or photodetector module is housed in the electrostrictive vibrator. An optical fiber bobbin of the polarizers is disposed coaxially with the electrostrictive vibrator. The first and second optical couplers for the respective axes are housed in the same package.

The optical fiber coils for the respective axes are wound around a comnon chassis in a manner to be removable therefrom along their axial directions. The optical fiber coil of each fiber optic gyroscope is wound around a chassis, in which an accelerometer is placed. in strap-down-type inertial equipment, the optical fiber coil of the fiber optic gyroscope is wound directly on a chassis. In platform-type inertial equipment, the optical fiber coil of the fiber optic gyroscope is wound on a gimbal shaft, or a gear which transmits rotation to the gimbal shaft. Light from a common light source is split and distributed by optical coupling means to fiber optic gyroscopes for the respective axes. A spare light source is coupled via optical coupling means to the common light source, and means is provided for detecting degradation of the common light source and driving the spare light source. In inertial equipment which comprises a fiber optic gyroscope for sensing an angular velocity in one axis, an accelerometer, and a processor unit, these components are disposed on the outer peripheral portion of the equipment, leaving the center portion of the equipment hollow.

## BRIEF DESCRIPTION OF THE DRAWINGS

Fig. 1 is a block diagram showing the arrangement of a conventional fiber optic gyroscope;

Fig. 2 is a perspective view of a conventional polarizer;

Fig. 3 is a perspective view of a conventional phase modulator;

Fig. 4 is a perspective view of a conventional light source;

Fig. 5 is a perspective view of a conventional photodetector module;

Fig. 6 is a sectional view of a conventional optical fiber coupler;

Fig. 7 is a sectional view taken on the line 7-7 in Fig. 6;

Fig. 8 is a perspective view of a conventional optical fiber coil;

Fig. 9 is a sectional view of the optical fiber coil;

Fig. 10 is a perspective view illustrating an example in which a light source module and a polarizer are formed as a unitary structure;

Fig. 11 is a perspective view illustrating an example in which the light source module and a phase modulator are formed as a unitary structured;

Fig. 12 is a plan view of the light source

Fig. 13 is a sectional view of the light source module depicted in Fig. 12;

Fig. 14 is a perspective view illustrating an example in which the light source module, the polarizer, and the phase modulator are formed as a unitary structure;

Fig. 15 is a perspective view illustrating an example in which optical fibers of polarizers for three axes are separately wound around a common bobbin;

Fig. 16 is a perspective view illustrating an example in which optical fibers of polarizers for three axes are wound together around a common bobbin;

Fig. 17 is a perspective view illustrating an example in which optical fibers of polarizers of three axes are arranged coaxially;

Fig. 18 is a perspective view illustrating an example in which a light source module for three axes and a polarizer for three axes are formed as a unitary structure;

Fig. 19 is a sectional view of a phase modulator for three axes;

Fig. 20 is a perspective view illustrating an example in which the light source module for three axes and the phase modulator for three axes are formed as a unitary structure;

Fig. 21 is an exploded perspective view illustrating an example in which a plurality of optical fiber couplers are packaged;

Fig. 22 is a perspective view illustrating the inertial equipment of the present invention;

Fig. 23 is a perspective view illustrating the strap-down-type inertial equipment of the present invention;

Fig. 24 is a block diagram illustrating a three-axis fiber optic gyroscope;

Fig. 25 is a perspective view illustrating the platform-type inertial equipment of the present invention; and

Fig. 26 is a perspective view illustrating another example of the inertial equipment of the present invention.

## DESCRIPTION OF THE PREFERRED EMBODIMENTS

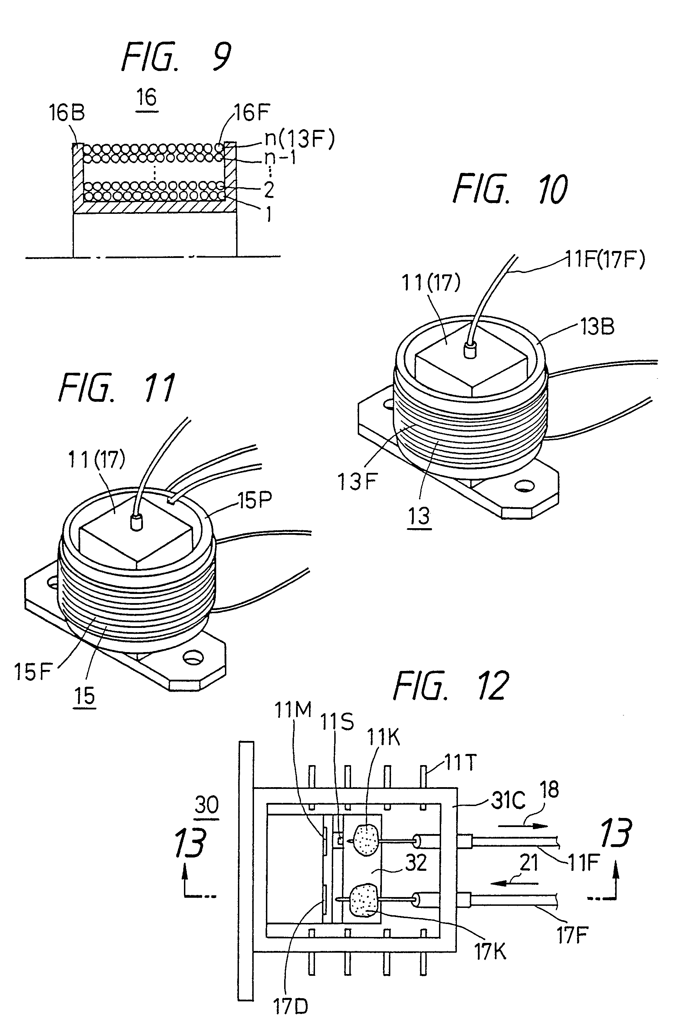

Fig. 9 illustrates an embodiment of the present invention, in which an optical fiber 16F is wound, as an optical fiber coil 16 for angular velocity sensing use, on a bobbin 16B, and an optical fiber 13F of the polarizer 13 is also wound together with the optical fiber coil 16. In this instance, the optical fiber 13F of the polarizer 13 may preferably be wound into a first or nth layer of the coil 16 for ease of its winding.

Fig. 10 illustrates an arrangement in which the polarizer 13, formed by winding an optical fiber 13F around a bobbin 13B, is disposed outside a light source module 11. The polarizer 13 is secured by potting or mechanically fixed to the light source module 11. The light source module 11 may also be replaced with a photodetector module 17. It is also possible to round the outer peripheral surface of the case of the light source module 11 or the photodetector module 17 and wind the optical fiber 13F directly around it without using a bobbin.

Fig. 11 shows another example in which an optical fiber 15F is wound on a cylindrical electrostrictive vibrator 15P of the phase modulator 15 and the light source module 11 is disposed inside the electrostrictive vibrator 15P.

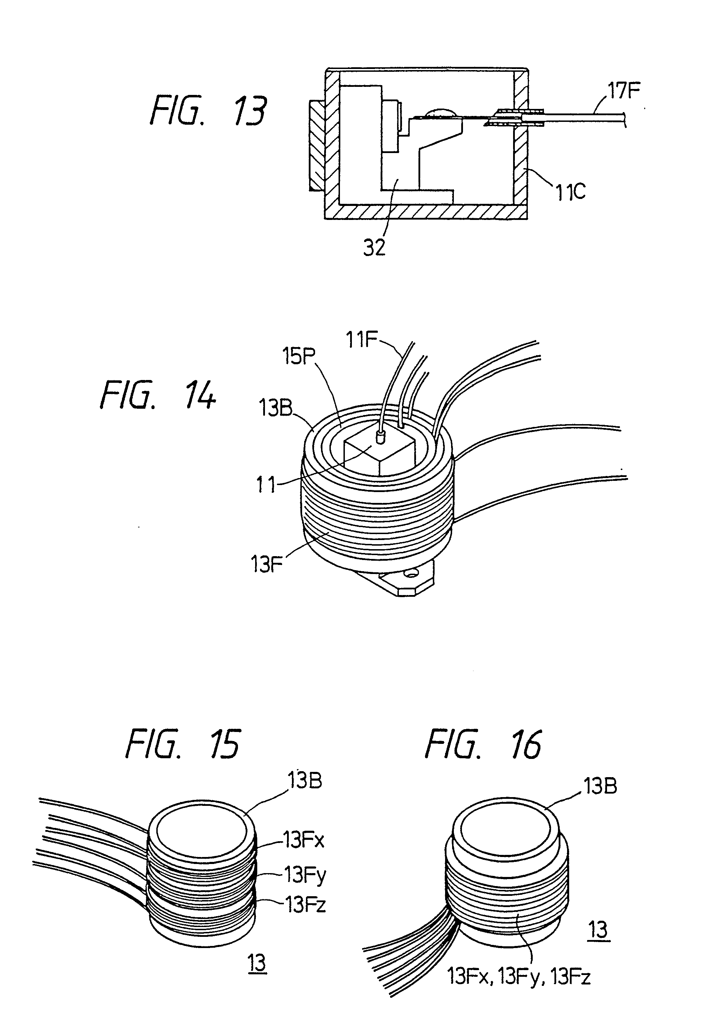

Fig. 12 illustrate an optical module 30 in which a light source chip 11S and a photodetector 17D for detecting interference light are housed in the same package 31C. Fig. 13 shows a cross section along a line 13-13 in Fig. 12. An optical fiber 11F has its optical axis aligned with the light source chip 11S and is affixed to a chip carrier 32 as by soldering 11K. A photodetector 11M is to monitor a portion of light emitted from the light source chip 11S. An optical fiber 17F is to receive therethrough the interference light 21 in Fig. 1. This optical fiber 17F has also its optical axis aligned with the photodetector 17D and is fixed by soldering 17K, for example.

Fig. 14 illustrates another example in which an electrostrictive vibrator 15P of the phase modulator 15 is disposed outside a light source module 11 and an optical fiber 13F of the polarizer 13 is wound on a bobbin 13B disposed outside the electrostrictive vibrator 15P. The phase modulator 15 and the polarizer 13 may also be exchanged in position. The light source module 11, the phase modulator 15, and the polarizer 13 are assembled into a unitary structure through use of a potting or bonding agent, or by mechanical means. The light source module 11 may also be substituted with the photodetector module 17 or the light source module 30 shown in Fig. 12.

Next, a description will be given of a multiaxis fiber optic gyroscope. The multiaxis fiber optic gyroscope has, for example, three input axes, and the fiber optic gyroscope depicted in Fig. 1 is employed for each of the three axes. Fig. 15 shows the case where optical fibers 13Fx, 13Fy, 13Fz of the polarizer 13 for the three axes are wound on the same bobbin 13B but at different positions in the axial direction of the bobbin 13B. Fig. 16 shows the case where the optical fibers 13Fx, 13Fy, 13Fz of the polarizer 13 are wound together on the same bobbin 28 13B at the same axial position.

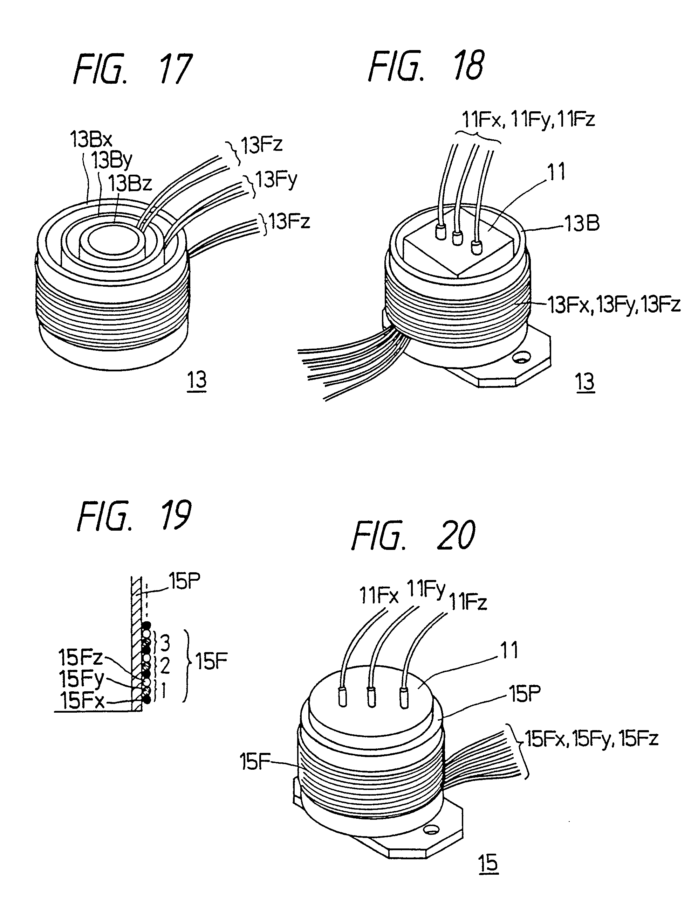

Fig. 17 shows an example in which optical fibers 13Fx, 13Fy and 13Fz of the polarizer 13 are wound on bobbins 13Bx, 13By and 13Bz of different diameters, respectively, and the bobbins 13By and 13Bz are disposed inside the bobbin 13Bx of the largest diameter coaxially therewith. The bobbins 13Bx, 13By and 13Bz are fixed together through use us of a potting or bonding agent, or mechanically.

In a multiaxis fiber optic gyroscope, at least two sets of light source chips 11S, photodetectors 11M for monitoring the quantity of light from the light source chips 11S, and end portions of optical fibers 11F shown in Fig. 12 are housed in the same package to form a light source module 11. Fig. 18 shows an example where a light source module 11 is disposed in a polarizer 13. Instead of the light source module 11, a photodetector module 17 formed by incorporating at least two sets of photodetectors for monitoring interference light and optical fibers into the same package. May be disposed inside the polarizer 13. It is also possible to dispose inside the polarizer 13 an optical module 30 which comprises at least two sets of light source chip and photodetector encased in the same package 31C as depicted in Figs. 12 and 13.

Fig. 19 shows a phase modulator 15 formed by winding together optical fibers 15Fx, 15Fy and 15Fz for the respective axes around the same electrostrictive vibrator 15P. The three optical fibers 15Fx, 15Fy and 15Fz are bonded or fused together and wound on the electrostrictive vibrator 15P so as to provide the same phase modulation in the optical fibers.

The phase modulator 15 may be provided outside a light source module 11 as shown in Fig. 20. It is also possible to round the outer peripheral surface of the case of the light source module 11 or photodetector module 17 for three axes and directly wind the optical fibers 15Fx, 15Fy, 15Fz of the polarizer 15 around the case. In Fig. 18 the phase modulator 13 for three axes may be provided outside the polarizer 15, in which case the polarizer 15 and the phase modulator 17 may be exchanged in position.

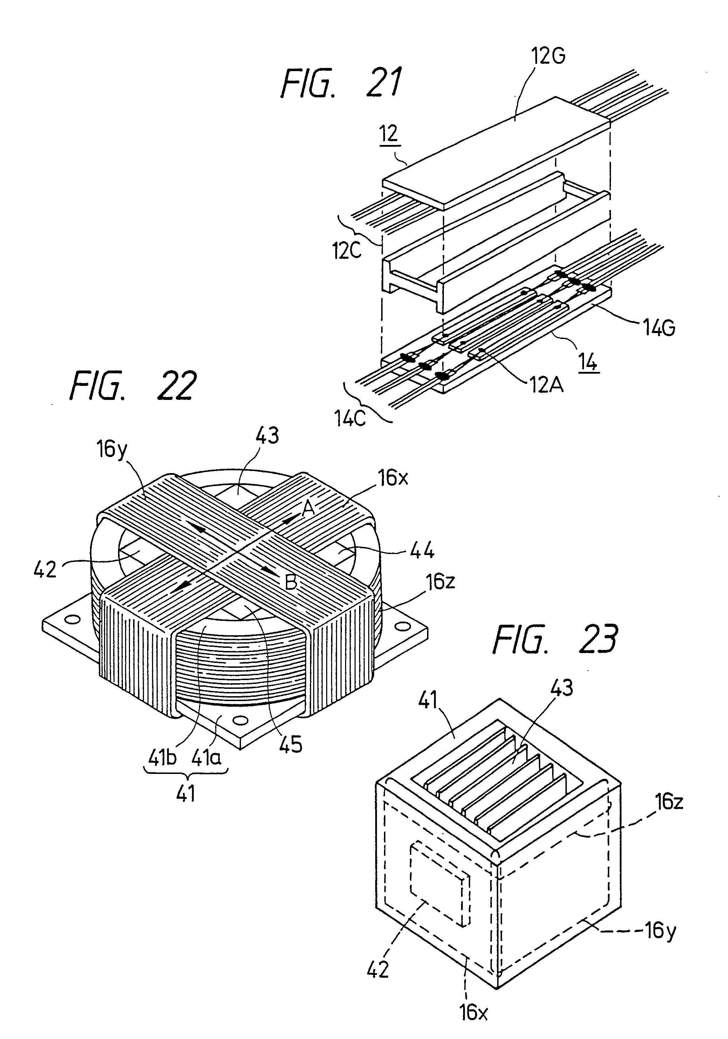

Fig. 21 illustrates another example in which six optical fiber couplers 12C, 14C, which form the first and second optical couplers 12, 14 each for three axes, are housed in the same package.

Fig. 22 illustrates an embodiment of the inertial equipment of the present invention, in which optical fiber coils 16x, 16y and 16z are wound on a chassis 41 composed of a square base plate 41a and a bobbin 41b so that their axes perpendicularly cross one another, making it possible to sense angular velocities in three perpendicularly intersecting axial directions. Inside the chassis 41 there are provided as an optical section 42 of the fiber optic gyroscope, a polarizer 13 for three axes shown in Fig. 15, 16 or 17, or a polarizer 13 accommodating the light source module 45 shown in Fig. 18, and/or a phase modulator 15 accommodating the light source module 50 shown in Fig. 20, and/or optical couplers 12, 14 shown in Fig. 21, and if allowed the chassis 41 may further accommodate an electronic section 43 of the gyroscope, an accelerometer 44, an electronic section 45 for attitude calculation, etc., forming the inertial equipment. The optical fiber coils 16y and 16x can be removed from the chassis 41 in their axial directions indicated by A and B, respectively. This allows ease in repair and maintenance of the interior of the chassis 41 of the inertial equipment.

Fig. 23 illustrates strap-down inertial equipment of the present invention, in which optical fiber coils 16x, 16y and 16z of the fiber optic gyroscope for measurement in three axes are wound directly on a chassis 41. The optical fiber coils 16x, 16y and 16z are wound on side panels of the chassis 41 and the optical fiber coil 16z is wound along the top of the chassis 41. The chassis 41 has housed therein an optical section 42 and electronics card assembly 43 of each fiber optic gyroscope.

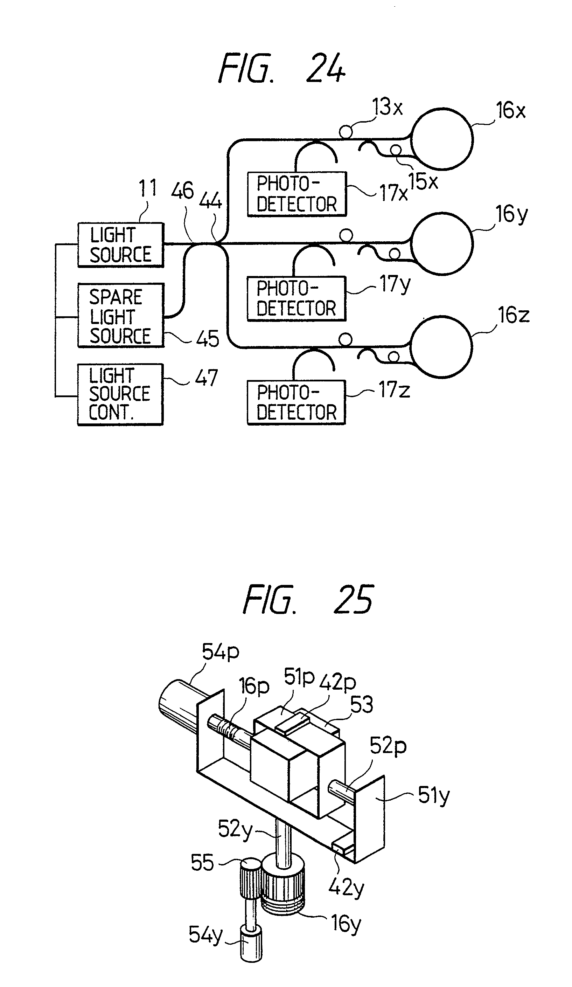

As shown in Fig. 24, information on angular velocities in the three perpendicularly intersecting axes, available from the three optical fiber coils 16x, 16y and 16z, is provided to photodetectors 17x, 17y and 17z. Light from a light source 11 is applied via optical coupling means 44 into each of the three fiber optic gryroscopes. Light from a spare light source 45 is coupled with the optical fiber from the light source 11 by optical coupling means 46. A light source control circuit 47 turns ON the light source 11 and, when detecting degradation of the light source 11 turns OFF the light source 11 and turns ON the spare light source 45. That is, the light source control circuit 46 monitors the quantity of light from the light source 11 by a photodetector and, when the quantity of light from the light source 11 becomes smaller than a fixed value, turns OFF the light source 11 and turns ON the spare light source 45.

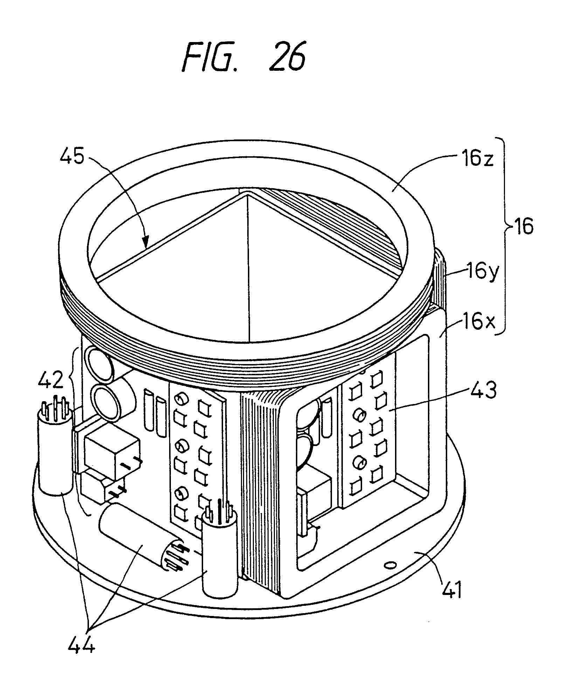

Fig. 25 illustrates platform-type inertial equipment of the present invention adapted for sensing angular velocities in two axes. A yaw-axis gimbal 51y carries a pitch-axis gimbal 51p through a pitch-axis gimbal shaft 52p, and the pitch-axis gimbal 51p carries an object 53 which is held at a standstill with respect to an inertial space. The pitch-axis gimbal shaft 52p is driven by a pitch axis drive motor 54p, and the rotation of a yaw shaft drive motor 54y is transmitted via transmission gear 55 to a yaw-axis gimbal shaft 52y. In this example an optical fiber 16p of the fiber optic gyroscope is wound directly on the pitch-axis gimbal shaft 52p and an optical fiber coil 16y is wound directly on the yaw-axis gimbal shaft 52y. Angular velocities in the pitch and yaw axes are sensed by the fiber optic gyroscope and, by the gimbal structure, the platform on the gimbal is stabilized in the two axes. In this embodiment, the yaw-axis gimbal 51y and the pitch-axis gimbal 51p are respectively mounted with a set of the light source module 11 (or photodetector 17) and the polarizer 13 shown in Fig. 10 or a set of the light source module 11 (or photodetector 17) and the phase modulator 15 shown in Fig. 11 as optical sections 42y and 42p.

Fig. 26 illustrates another example of the inertial equipment of the present invention. Optical fiber coils 16x, 16y and 16z are disposed around a hollow structured chassis 41 so that angular velocities in three perpendicularly intersecting axial directions can be sensed. Inside the optical fiber coil 16x and on two sides of the chassis 41 where no optical fiber coils are provided, there are disposed an optical section 42 of the fiber optic gyroscope, an electronics section 43 for the fiber optic gyroscope, an accelerometer 44, a power source system electronics section 45, etc.

In this embodiment, since the chassis 41 has a hollow structure, associated devices are connected to the equipment by wiring and piping. This permits simplification of the entire structure of the equipment.

As described above, according to the present invention, the largest possible number of components of each of the fiber optic gyroscope and the inertial equipment are assembled into a unitary structure, and consequently, the fiber optic gyroscope and the inertial equipment can be miniaturized.

It will be apparent that many modifications and variations may be effected without departing from the scope of the novel concepts of the present invention.

## Claims

1. Inertial equipment comprising at least a fiber optic gyroscope for sensing an angular velocity in at least one axis and an accelerometer, wherein an optical fiber coil of said fiber optic gyroscope is wound on a chassis and said accelerometer is disposed in said chassis.

2. Strap-down-type inertial equipment comprising at least a fiber optic gyroscope for sensing an angular velocity in at least one axis, wherein an optical fiber coil of said optic fiber gyroscope is wound directly on a chassis.

3. Platform-type inertial equipment comprising at least a fiber optic gyroscope for sensing an angular velocity in at least one axis, wherein an optical fiber coil of said fiber optic gyroscope is wound on a gimbal shaft of said inertial equipment.

4. Platform-type inertial equipment comprising at least a fiber optic gyroscope for sensing an angular velocity in at least one axis, wherein an optical fiber coil of said fiber optic gyroscope is wound on a yaw-axis gimbal shaft of said inertial equipment.

5. Inertial equipment comprising at least fiber optic gyroscopes for sensing angular velocities in a plurality of axes, and a common light source provided for said fiber optic gyroscopes.

6. Inertial equipment of claim 5, further comprising a spare light source, optical coupler means for coupling said spare light source with said common light source, and means for turning ON said spare light source upon detecting the degradation of said comnon light source.

7. Inertial equipment comprising at least a fiber optic gyroscope for sensing an angular velocity in at least one axis, an accelerometer, and a calculating function section, wherein said fiber optic gyroscope, said accelerometer and said calculating function section are disposed on the outer periphery of said inertial equipment, said inertial equipment being hollow.

8. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, said polarizer being formed by winding on a bobbin an optical fiber whose bending loss differs between cross polarization modes, and a light source module having housed therein said light source or a photodetector module having housed therein said photodetector being disposed in said bobbin.

9. Inertial equipment of claim 8, wherein said optical fiber of said polarizer is wound directly on said light source module or photodetector module.

10. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, said phase modulator being formed by winding an optical fiber on a cylindrical electrostrictive vibrator and a light source module having housed therein said light source or photodetector module having housed therein said photodetector being disposed inside said electrostrictive vibrator.

11. Inertial equipment of claim 10, wherein said polarizer is formed by winding on a bobbin an optical fiber whose bending loss differs between cross polarization modes and said bobbin is disposed coaxially with said electrostrictive vibrator.

12. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil said light source and said photodetector being housed in the same package.

13. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, said first optical coupler and said second optical coupler being optical fiber couplers formed by fusing together and extending two optical fibers and said optical fiber couplers being housed in the same package.

7

14. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provided to form a multiaxis fiber optic gyroscope, said polarizer of each of said at least two fiber optic gyroscopes being formed by winding on a bobbin an optical fiber whose bending loss differs between cross polarization modes, and said optical fibers of said polarizers being wound coaxially.

15. Inertial equipment of claim 14, wherein said optical fibers of said polarizers are wound on the same bobbin.

16. Inertial equipment of claim 14, wherein said optical fibers of said polarizers are wound on different bobbins disposed coaxially.

17. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric convension of interference light resulting from said right-handed light and said left-handed light both having propagated through said optical fiber coil, at least two such fiber optic gyroscopes being provided to form a multiaxis fiber optic gyroscope, said light sources of said at least two fiber optic gyroscopes being incorporated in one light source module.

18. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provided to form a multiaxis fiber optic gyroscope, and said photodetectors of said at least two fiber optic gyroscopes being incorporated in one photodetector module.

19. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provided to form a multiaxis fiber optic gyroscope and said light sources and said photodetectors of said at least two fiber optic gyroscopes being incorporated in one module.

20. Inertial equipment of claim 1, 2, 3, 4, or 7, wherein said fiber optic gyroscope includes a light source, a firt optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provided to form a multiaxis fiber optic gyroscope and said phase modulators of said at least two fiber optic gyroscopes being formed by winding optical fibers on a common cylindrical electrostrictive vibrator.

21. Inertial equipment of claim 20, wherein said optical fibers said phase modulators wound on said common electrostrictive vibrator are fused together.

22. Inertial equipment of claim 20, wherein a light source module having incorporated therein said light sources of said at least two fiber optic gyroscopes or a photodetector having incorporated therein said photodetectors of said at least two fiber optic gyroscopes is housed in said common electrostrictive vibrator.

23. Inertial equipment of claim 17, wherein said polarizer of each of said at least two fiber optic gyroscopes is formed by winding an optical fiber whose bending loss differs between cross polarization modes, said fiber being wound directly on said light source module.

24. Inertial equipment of claim 18, wherein said polarizer of each of said at least two fiber optic gyroscopes is formed by winding an optical fiber whose bending loss differs between cross polarization modes, said optical fiber being wound directly on said photodetector module.

25. Inertial equipment to claim 20, wherein said polarizer of each of said at least two fiber optic gyroscopes is formed by winding an optical fiber whose bending loss differs between cross polarization modes, said optical fiber being wound on a bobbin disposed coaxially with said electrostrictive vibrator.

26. Inertial equipment of claim 1, 2, 3, 4, or 7, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provied to form a multiaxis fiber optic gyroscope, said first and second optical couplers of each of said at least two fiber optic gyroscopes being formed by fusing together and extending two optical fibers, and said optical fibers of said at least two fiber optic gyroscopes being housed in the same package.

27. Inertial equipment of claim 1, wherein said fiber optic gyroscope includes a light source, a first optical coupler coupled with said light source, a polarizer coupled with said first optical coupler, a second optical coupler coupled with said polarizer, an optical fiber coil of at least one turn and coupled with said second optical coupler, a phase modulator connected in cascade to one end of said optical fiber coil, for phase modulating right-handed light and left-handed light, and a photodetector coupled with said first optical coupler, for performing optoelectric conversion of interference light resulting from said right-handed light and said left-handed light both having propagated through said optical fiber coil, at least two such fiber optic gyroscopes being provided to form a multiaxis fiber optic gyroscope, said optical fiber coils of said at least two fiber optic gyroscopes being wound on said chassis common to them in a manner to be removable therefrom in their axial directions, respectively.

## FIG. 1
## PRIOR ART

## FIG. 2
## PRIOR ART

## FIG. 3
## PRIOR ART

# FIG. 4
## PRIOR ART

# FIG. 5
## PRIOR ART

# FIG. 7
## PRIOR ART

# FIG. 6
## PRIOR ART

# FIG. 8
## PRIOR ART

## FIG. 9

16

16B    16F

n(13F)
n-1
:
2
1

## FIG. 10

11(17)    11F(17F)

13B

13F    13

## FIG. 11

11(17)

15P

15F    15

## FIG. 12

11M  11S  11K    11T

30    31C    18

13    13

32    11F

21

17K    17F

17D

*FIG. 13*

17F

11C

32

*FIG. 14*

11F

15P

13B

11

13F

*FIG. 15*

13B

13Fx

13Fy

13Fz

13

*FIG. 16*

13B

13

13Fx, 13Fy, 13Fz

FIG. 17

13Bx
13By
13Bz
13Fz
13Fy
13Fz
13

FIG. 18

11Fx, 11Fy, 11Fz
11
13B
13Fx, 13Fy, 13Fz
13

FIG. 19

15P
3
2
1
15F
15Fz
15Fy
15Fx

FIG. 20

11Fx 11Fy 11Fz
11
15P
15Fx, 15Fy, 15Fz
15F
15

FIG. 21

FIG. 22

FIG. 23

## FIG. 24

## FIG. 25

FIG. 26